(19) Europäisches Patentamt
European Patent Office
Office européen des brevets

(11) Veröffentlichungsnummer : **0 098 444 B2**

# (12) NEUE EUROPÄISCHE PATENTSCHRIFT

(45) Veröffentlichungstag der neuen Patentschrift : **15.06.94 Patentblatt 94/24**

(51) Int. Cl.⁵ : **B01D 53/34,** C10K 1/26

(21) Anmeldenummer : **83106019.9**

(22) Anmeldetag : **21.06.83**

## (54) Verfahren zur Entfernung von Schwefelwasserstoff aus Gasen mit gleichzeitiger Regeneration der Gasreinigungsmassen.

(30) Priorität : **26.06.82 DE 3223952**

(43) Veröffentlichungstag der Anmeldung : **18.01.84 Patentblatt 84/03**

(45) Bekanntmachung des Hinweises auf die Patenterteilung : **25.01.89 Patentblatt 89/04**

(45) Bekanntmachung des Hinweises auf die Entscheidung über den Einspruch : **15.06.94 Patentblatt 94/24**

(84) Benannte Vertragsstaaten : **AT BE CH DE FR GB IT LI LU NL SE**

(56) Entgegenhaltungen :
**DE-B- 1 017 319**
**DE-B- 1 020 148**
**DE-C- 613 615**
**DE-C- 745 439**
**"gwf"-gas/erdgas, 121 Jg. (1980), S. 23-27**

(73) Patentinhaber : **Norsk Hydro Chemtech GmbH**
**Postfach 10 06 61**
**D-47006 Duisburg (DE)**

(72) Erfinder : **Friedrichs, Hans, Dipl.-Ing.**
**Annabergstrasse 5**
**D-4200 Oberhausen 1 (DE)**
Erfinder : **Zanke, Bruno**
**Nohlstrasse 24**
**D-4200 Oberhausen 1 (DE)**



Jouve, 18, rue Saint-Denis, 75001 PARIS

## Beschreibung

Es sind Verfahren bekannt, Schwefelwasserstoff aus Gasen durch Einsatz von Luxmasse, Raseneisenerz usw. zu entfernen. Diese Gasreinigung erfolgt nach der chemischen Gleichung

$$2\ Fe\ (OH)_3 + 3H_2S \rightarrow Fe_2S_3 + 6H_2O.$$

Das gebildete Eisensulfid wird durch Sauerstoff und Wasser in Eisenhydroxyd zurückverwandelt, wobei elementarer Schwefel anfällt. Dieser Vorgang, den man mit Regeneration bezeichnet, vollzieht sich nach folgender chemischer Gleichung:

$$Fe_2S_3 + 1{,}5\ O_2 + 3H_2O \rightarrow 2Fe\ (OH)_3 + 3S.$$

Diese Regeneration kann sowohl außerhalb der Gasreinigungsanlage als aber auch in der Anlage selbst vorgenommen werden, wobei letztere Verfahrensweise, deren Prinzip beispielsweise in DE-B-1 017 319 beschrieben wird, erhebliche Arbeitseinsparungen mit sich bringt. Es ist bekannt, daß dies bei Großanlagen unter entsprechendem meß- und regeltechnischem Aufwand dadurch möglich ist, daß man Sauerstoff meist durch Luftzufuhr ständig in für die vollständige Regeneration ausreichenden Mengen zugibt. Ein derartiges Verfahren ist beispielsweise aus DE-C-613 615 bekannt, bei dem vorgesehen ist, den Sauerstoffgehalt des Reingases fortlaufend zu messen und danach den Sauerstoffzusatz zum Rohgas automatisch durch einen Sauerstoffschreiber so zu steuern, daß ein Sauerstoffgehalt von 0,3 bis 0,5 Vol.-% im Reingas vorliegt.

Für kleine Anlagen ist dieser meß- und regeltechnische Aufwand aber so groß, daß er gegebenenfalls sogar die Investitionskosten für die Entschwefelungsanlage übersteigt.

Bei Klärgasanlagen ist z. B. der Tages-Gasanfall und der $H_2S$-Gehalt der Gase relativ gleichmäßig. D. h., über 24 Stunden gesehen muß täglich etwa die gleiche Sauerstoffmenge über Luft zugeführt werden, um eine vollständige Regeneration durchzuführen. Nicht konstant dagegen ist der Gasanfall pro Stunde. Es gibt nun die Möglichkeit, die für die Regeneration benötigte Sauerstoffmenge durch reichliche Sauerstoff- oder Luftzufuhr ständig zuzugeben. Dies würde aber bedeuten, daß der Heizwert des Gases zeitweise unnötig heruntergedrückt wird.

Es bestand daher ein Bedürfnis nach einem Gasentschwefelungsverfahren, das eine einfache, sichere und kostengünstige Regelung der Sauerstoffzufuhr ermöglicht und die beschriebenen nachteile vermeidet.

Ein derartiges Verfahren zur Entschwefelung von Gasen, bei dem mittels Eisenhydroxid enthaltenden Reinigungsmassen gleichzeitig mit der Schwefelwasserstoffentfernung eine Regeneration der Gasentschwefelungsmassen betrieben wird, wird durch die Erfindung geschaffen. Es ist dadurch gekennzeichnet, daß man den bei Klärgasanlagen für einen vorgewählten Zeitraum zur Regeneration benötigten Sauerstoff anhand der bekannten anfallenden Menge des zu reinigenden Gases und des darin enthaltenen $H_2S$ ermittelt und gleichmäßig über den gewählten Zeitraum, vorzugsweise 24 Stunden, verteilt zudosiert. Der benötigte Sauerstoff wird dabei bevorzugt in Form von Luft zugeführt.

Das erfindungsgemäße Verfahren weist weiterhin folgenden Vorteil auf: Bei allen zu entschwefelnden Gasen, die keinen Sauerstoff enthalten, besteht die Gefahr, daß sich schwer regenerierbares Ferrosulfid bildet. Dadurch wird die Aufnahmekapazität der Masse gegebenenfalls unnötig herabgesetzt. Durch ständiges Vorhandensein von Sauerstoff wird diese Gefahr praktisch ausgeschlossen.

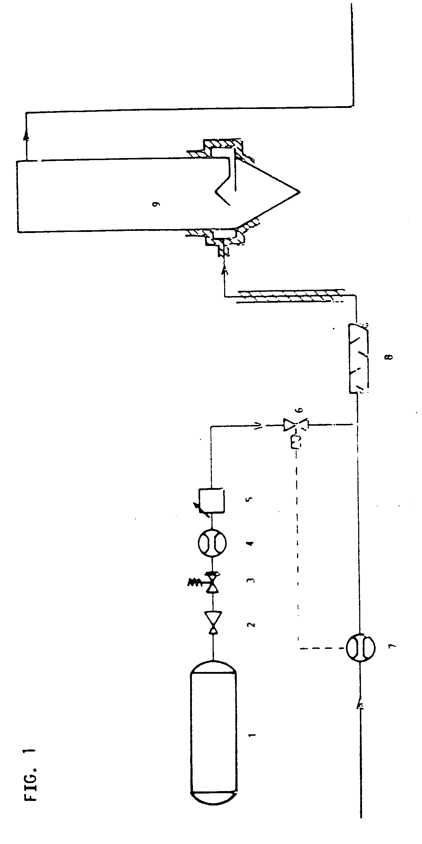

Die Bildung von Eisensulfid und die Regenerierung laufen bei dem erfindungsgemäßen Verfahren zwar gleichzeitig, aber nicht gleichförmig. Man kann somit die für einen bestimmten Zeitraum, z. B. einen Tag, erforderliche Sauerstoffmenge gleichmäßig über 24 Stunden verteilt zugeben. D. h., bei hohem Gasanfall wird die Regenerierung nicht vollständig durchgeführt. Sie wird erst in Zeiten von geringem Gasanfall nachgeholt. Unter diesen Bedingungen läßt sich eine einfache und billige Dosiereinrichtung installieren, wie sie in der Zeichnung dargestellt ist.

Aus einer Druckluftquelle 1, beispielsweise einem meist vorhandenen Druckluftnetz, wird eine Druckluftmenge über ein Reduzierventil 2, das auf den erforderlichen Druck für die nachgeschalteten Regelorgane und den Gasleitungsdruck abgestimmt ist, entnommen. Ein Sicherheitsventil 3 verhindert bei einer Störung des Reduzierventils 2 eine zu große Luftzufuhr in das zu reinigende Gas. Ein Klein-Durchflußmesser 4, der mit einem Strömungsregler kombiniert ist, wird in die Leitung mit den reduzierten Luftdruck eingebaut. An dem Klein-Durchflußmesser 4 mit Sollwerteinstellung 5 läßt sich die gewünschte Luftmenge einstellen. Der Strömungsregler hält diese Menge konstant, unabhängig von Nachdruckschwankungen. Durch Einbau eines Grenzwert-Sigalgebers, der auf ein Magnetventil 6 in der Druckluftleitung arbeitet, können Störungen im Durchflußmesser 4 sicher abgefangen werden.

Ein weiterer Grenzwertsignalgeber gibt ein Signal, wenn durch irgendwelche Störungen zu wenig Luft zudosiert wird.

Falls die Möglichkeit besteht, daß das zu reinigende Gas ausfallen kann, kann ein Strömungswächtet 7 in den zu reiniegenden Gasstrom eingebaut werden, der bei Unterschreiten einer einstellbaren Minimalmenge gegebenenfalls die Luftzufuhr über das oben erwähnte Magnetventil 6 in der Druckleitung absperrt.

Gas und zugemischte Luft werden dann über die Mischstrecke 8 in der Entschwefler 9 geleitet.

**Beispiel**

| | |
|---|---|
| 1200 $m^3$ Gas/d x 7 g $H_2S/m^3$ | = 8400 g $H_2S$ |
| 8400 g $H_2S$ | = 17121 g $Fe_2S_3$ |
| 207,9 g $Fe_2S_3$ benötigen | = 48 g $O_2$ |
| 17121 g $Fe_2S_3$ | = 3953 g $O_2$ |
| 32 g $O_2$ | = 22,4 l $O_2$ |
| 3953 g $O_2$ | = 2767 l $O_2$ x 5 = 13835 l Luft/d |

Im Druchschnitt sind pro Stunde 50 $m^3$ Gas zu reinigen, die 0,58 $m^3$ Luft/h benötigen. Auf diese Menge wird der Durchflußregler eingestellt. Beträgt die Spitze 80 $m^3$ Gas/h, fehlen dann 346 l Luft/h. Bei allen Gasmengen unter 50 $m^3$ Gas/h wird dieses Minus dann ausgeglichen und die Regeneration nachgeholt.

**Patentansprüche**

1. Verfahren zur Entschwefelung von Gasen in Klärgasanlagen mit schwankendem Gas- und $H_2S$-Anfall, wobei mittels Eisenhydroxid enthaltenden Reinigungsmassen gleichzeitig mit der Schwefelwasserstoffentfernung eine Regeneration der Gasentschwefelungsmassen betrieben wird, dadurch gekennzeichnet, daß man den für einen vorgewählten Zeitraum zur Regeneration benötigten Sauerstoff anhand der bekannten anfallenden Menge des zu reinigenden Gases und des darin enthaltenen $H_2S$ ermittelt und gleichmäßig über den gewählten Zeitraum verteilt zudosiert.

2. Verfahren gemäß Anspruch 1, dadurch gekennzeichnet, daß der vorgewählte Zeitraum 24 Stunden beträgt.

**Claims**

1. Process for the desulphurisation of gases in sewage gas plants with varying amounts of gas and $H_2S$, wherein, by means of purifying substances containing iron hydroxide, the gas desulphurisation substances are regenerated simultaneously with the removal of hydrogen sulphide, characterised in that the oxygen required for regeneration for a pre-selected period is determined on the basis of the known amount of the gas to be purified and the $H_2S$ contained therein and is metered in uniformly over the selected period.

2. Process according to claim 1, characterised in that the pre-selected period is 24 hours.

**Revendications**

1. Procédé de désulfuration de gaz dans une installation de clarification de gaz avec des quantités variables de gaz et du $H_2S$ avec, en même temps que l'élimination de sulfure d'hydrogène, une régénération de la masse gazeuse désulfurée avec une matière de purification contenant de l'hydroxyde de fer, procédé caractérisé en ce que l'on détermine l'oxygène qui est nécessaire à la régénération pour une période préalablement choisie d'après la quantité produite connue de gaz à purifier et du $H_2S$ qu'il contient , et on l'ajoute progressivement et régulièrement pour le répartier pendant toute la période choisie.

2. Procédé selon la revendication 1, caractérisé en ce que la période préalablement choisie est de 24 heures.

FIG. 1